# EUROPEAN PATENT SPECIFICATION

(11) **EP 3 351 077 B1**
(45) Date of publication and mention of the grant of the patent: **01.04.2020**
(21) Application number: 17001059.9
(22) Date of filing: 21.06.2017
(51) Int. Cl.: A01B 69/04, A01B 79/00

(54) **TRAVEL ROUTE GENERATION DEVICE AND TRAVEL ROUTE GENERATION PROGRAM**
REISEROUTENERZEUGUNGSVORRICHTUNG UND REISEROUTENERZEUGUNGSPROGRAMM
DISPOSITIF DE GÉNÉRATION D'ITINÉRAIRE ET PROGRAMME DE GÉNÉRATION D'ITINÉRAIRE

(30) Priority: 20.01.2017 JP 2017008344
(43) Date of publication of application: 25.07.2018
(73) Proprietor: Kubota Corporation, Osaka 556-8601 (JP)
(72) Inventor: Uoya, Yasuhisa, Hyogo, 6618567 (JP); Shimamoto, Izuru, Hyogo, 6618567 (JP); Tamatani, Kenji, Hyogo, 6618567 (JP); Suzukawa, Megumi, Hyogo, 6618567 (JP); Shinkai, Atsushi, Osaka, 5900823 (JP); Sakaguchi, Kazuo, Hyogo, 6618567 (JP)
(74) Representative: Müller-Boré & Partner Patentanwälte PartG mbB

(56) References cited:
- EP-A1- 3 042 554
- WO-A1-2012/142395
- WO-A1-2017/004074
- US-A1- 2004 193 349
- US-A1- 2007 192 024
- US-A1- 2016 174 453

## Description

### [Technical Field]

The present invention relates to a travel route generation device and a travel route generation program that generate a travel route for a work vehicle that automatically travels in a work field.

### [Background Art]

In recent years, a work vehicle that works while automatically traveling in a work field has been proposed. In order to cause a work vehicle to travel automatically in this way, it is necessary to generate a travel route that serves as a travel target. In order to generate a travel route that covers a work field, it is a precondition to accurately grasp a shape of the work field. Since a work field such as a field is divided by a private farm road or the like, it is difficult to determine an accurate shape of the work field from a general map.

Therefore, JP 2016-31649 A discloses teaching travel by which a manually operated tractor travels within a field to acquire external shape data of the field from a locus of the travel. A procedure of the teaching travel is as follows:
(1) A driver gets into a tractor and enters a field by a manual operation.
(2) Start a teaching program for the tractor.
(3) Move the tractor to a nearby corner of the field, move the tractor to a starting point of headland tilling, and take down a tilling machine. Through an operation of lifting down the tilling machine, a work field shape calculating module regards a point of lifting down the tilling machine as a corner point of the field external shape.
(4) Lift up the tilling machine once and proceed to a next corner while imagining tilling work.
(5) Move a child tractor to the tilling work travel starting point after turning travel, and lift down the tilling machine. Repeat this work and input each corner point of the field external shape.
(6) The work field shape is calculated by making the corner points of the field external shape, a field entrance, and an entrance direction as input parameters.

The travel route for the tractor to automatically travel in a central work field positioned inside a headland is generated using the work field shape calculated in this way.

US 2016/174453 A1 discloses a work vehicle coordinating system including a main vehicle position detection module for detecting a position of a main work vehicle, a sub vehicle position detection module for detecting a position of a sub work vehicle, a central work land path calculation section for calculating a central work land traveling path to be used by the sub work vehicle in an unmanned steered work traveling in a central work land, a first steering control section for unmanned-steering the sub work vehicle ahead of the main work vehicle based on the position of the sub work vehicle detected by the sub vehicle position detection module and the central work land traveling path, a headland path calculation section for calculating a headland traveling path and a second steering control section for unmanned-steering the sub work vehicle.

US 2007/192024 A1 discloses a path planer and method for planning a path of a vehicle defining a reference row having a reference contour in a work area. A representation of the defined reference row is established.

EP 3 042 554 A1 discloses a route setting device of an agricultural working vehicle.

WO 2012/142395 A1 discloses a system for providing visual crop data to a mobile device including at least one server computer in communication with a mobile device.

WO 2017/004074 A1 discloses systems and methods for capturing images of a field and performing agricultural data analysis of the images.

US 2004/193349 A1 discloses a system and method for determining a path plan for a vehicle including organizing a work area into partition areas based on at least one of an obstacle, a concavity, and an exclusion area associated with a work area.

### [Summary of Invention]

### [Technical Problems]

A work field such as a field may be divided by a boundary, such as a ridge, and an entrance passage for the work vehicle to enter and leave the work field may be determined for each work field. This entrance passage may be an inclined passage or a firmly hardened passage, and thus may be a region in which the work vehicle does not perform work. However, in calculation of the work field shape through the teaching travel in JP 2016-31649 A, existence of this entrance passage is neglected. Therefore, the travel route for automatic travel generated for the calculated work field shape may overlap with the entrance passage. In addition, a problem may also arise that a work region that is not covered by the travel route will be left because the travel route is set at a position distant from the entrance passage in order to avoid the travel route and the entrance passage overlapping each other.

The present invention is defined by independent claims 1 and 7. Preferred embodiments are defined in the dependent claims. In particular, there is provided a travel route generation device and a travel route generation program capable of easily and accurately calculating a target work region for automatic travel in the work field.

### [Solutions to Problems]

According to an aspect, a travel route generation device is provided. The travel route generation device may be for a work vehicle that enters and leaves a work field divided by a boundary through an entrance passage. The travel route generation device may include: a starting point registration unit that is configured to position-register a first endpoint on a side of the boundary of the entrance passage as a starting point; an intermediate point registration unit that is configured to position-register a shape feature point that prescribes a shape of the work field as an intermediate point; an end point registration unit that is configured to position-register a second endpoint facing the first endpoint on a side of the boundary of the entrance passage as an end point; a basic shape calculation unit that is configured to calculate a basic shape of the work field by connecting a position of the starting point, a position of the intermediate point, and a position of the end point; an entrance passage information generation unit that is configured to generate entrance passage information with a quadrangle as a shape of the entrance passage, the quadrangle having the starting point and the end point as opposite vertices and having two sides along an external shape extension line of the basic shape; and a travel route generation unit that is configured to define a region other than the entrance passage of the work field as a target work region, and to generate a travel route for the work vehicle to automatically travel in the target work region.

Note that terms indicating geometrical shapes used in the present disclosure, for example, a triangle, a quadrangle, a rectangle, and a polygon, are not used in order to identify a geometrically strict shape, but are used in order to describe such a shape that can generally be seen or understood as being almost a corresponding geometrical shape as a whole. Therefore, each side of a polygon is not always a straight line and may be (slightly) bended and/or uneven.

Further, in various embodiments and examples as described herein, the term "position-register" may be understood as to identify and/or register a position of a point. To "register" a position of a point, the travel route generation device may, for example, store information indicating the position of the point in a storage device.

This configuration may allow calculation of the basic shape of the work field by connecting the position of the starting point, the position of the intermediate point, and the position of the end point acquired in movement along the boundary of the work field that leaves one end of the entrance passage and returns to the other end of the entrance passage. The work field may be regarded as a polygon and the intermediate point may correspond to a polygon vertex, which may be a feature point of the shape. When the work field is a triangle, the number of intermediate points is one, when the work field is a quadrangle, the number of intermediate points is two, and when the work field is a pentagon, the number of intermediate points is three. The entrance passage can be regarded as a quadrangle that is substantially a rectangle. Since the starting point and the end point may correspond to opposite vertices of the rectangle, the shape of the rectangle indicating the entrance passage can be calculated. Accordingly, the basic shape of the work field may be a polygon in which a small rectangle (e.g. quadrangle) is interposed at a place corresponding to the entrance passage. Therefore, the target work region in which the work vehicle needs to work may be obtained by removing the rectangle indicating the entrance passage from the calculated work field shape. The travel route generation unit may generate the travel route that covers this target work region, thereby providing the travel route that causes neither problem that the travel route and the entrance passage overlap each other nor problem that the travel route is distant from the entrance passage.

Since the entrance passage may be inclined in the work field such as a field, it may be important that travel of the work vehicle that enters the target work region from the entrance passage is straight movement and that travel of the work vehicle immediately before leaving the target work region for the entrance passage is straight movement. Accordingly, it may be important to consider a travel direction of the work vehicle in the entrance passage as one of conditions of travel route generation. Therefore, it may be advantageous when the travel direction in the entrance passage is also calculated in addition to the shape of the entrance passage. For this object, in some examples, the entrance passage information generation unit may be configured to define vertices other than the starting point and the end point of the quadrangle representing the shape of the entrance passage as an inner point that is adjacent to the target work region and an outer point distant from the target work region, and a direction from a side connecting the outer point and the end point to a side connecting the starting point and the inner point may be an entry direction of the work vehicle into the target work region.

When it is assumed that the shape of the entrance passage is a quadrangle, the inner point and the outer point can be calculated from the positions of the starting point and the end point, which may be opposite vertices of the quadrangle. Since the position of the inner point may determine a boundary of the entrance passage and the target work region, it is preferable to detect as actual position as possible. Therefore, in some examples, an inner point registration unit may be provided that is configured to define vertices other than the starting point and the end point of the quadrangle representing the shape of the entrance passage as an inner point that is adjacent to the target work region and an outer point distant from the target work region, and to register the inner point. Employing the inner point registered as an actual position may allow more accurate calculation of the shape of the entrance passage.

Position coordinates needed for position-registration of the starting point, the intermediate point, and the end point may be a work field coordinate system or a latitude longitude system. However, a satellite positioning module may be mounted on the work vehicle that travels automatically, and it may be advantageous to use this satellite positioning module. Therefore, in some examples, position-registration of the starting point, the intermediate point, and the end point may be performed through traveling of the work vehicle along the boundary, and the positions of the starting point, the intermediate point, and the end point may be calculated using an own position based on positioning data from a satellite positioning module mounted on the work vehicle. With this configuration, since the work vehicle itself is used as a position measuring instrument, movement for work field shape measurement may be easy even if the work field is vast. A position detecting system using the satellite positioning module mounted on the work vehicle may be used, which may be advantageous in terms of cost as well.

When the work vehicle itself is used as a position measuring instrument, even when the work vehicle approaches the shape feature point of the work field (e.g. a vertex of a polygon), there may be a distance between the own position that is typically set for automatic travel and the position of the shape feature point. In order to solve a positional error caused by this distance, in some examples, the travel route generation device may be configured such that one or more aiming points associated with the positions of the starting point, the intermediate point, and the end point are prescribed at corners of the work vehicle, and the positions of the starting point, the intermediate point, and the end point are calculated by modifying the own position according to distances from the own position to the aiming points. This may enable the work vehicle to measure the positions accurately only by causing an appropriate corner (e.g. aiming point) of the work vehicle to approach the shape feature point of the work field. Preferably, setting such aiming points at a front right end, front left end, rear right end, and rear left end of the work vehicle and selecting one of the four ends may allow the aiming point to smoothly match the shape feature point of the work field. In some examples, one of the aiming points may be selected by a user and the selected aiming point may be used for calculating a position of one or more of: the starting point, the intermediate point, the end point.

According to another aspect, a travel route generation device is provided, the travel route generation device being configured to calculate a shape of an arbitrary region in the work field as the target work region and generate the travel route independently of the entrance. Such a travel route generation device for a work vehicle may include: a starting point registration unit that is configured to position-register a first endpoint of a target work region for work travel as a starting point; an intermediate point registration unit that is configured to position-register a shape feature point that prescribes a shape of the target work region as an intermediate point; an end point registration unit that is configured to position-register the first endpoint or a second endpoint adjacent to the first endpoint as an end point; a basic shape calculation unit that is configured to calculate a basic shape of the target work region by connecting a position of the starting point, a position of the intermediate point, and a position of the end point; and a travel route generation unit that is configured to generate a travel route for the work vehicle to automatically travel in the target work region, wherein one or more aiming points associated with the positions of the starting point, the intermediate point, and the end point may be prescribed at corners of the work vehicle or a vehicle capable of traveling in the target work region, and the positions of the starting point, the intermediate point, and the end point may be calculated by modifying an own position according to distances from the own position to the aiming points. This travel route generation device, which may use the work vehicle or a vehicle capable of traveling in the target work region as a position measuring instrument, can calculate the shape smoothly even if the target work region is vast. In some examples of this aspect, one of the aiming points may be selected by a user and the selected aiming point may be used for calculating a position of one or more of: the starting point, the intermediate point, the end point.

Functions of the travel route generation device described above can be substantially implemented by execution of a computer program installed in a computer. Therefore, the present disclosure also provides such a computer program. For example, according to an aspect, a computer program product for travel route generation is provided for a work vehicle that enters and leaves a work field divided by a boundary through an entrance passage. The computer program product may cause a computer to execute: a starting point registration function of position-registering a first endpoint on a side of the boundary of the entrance passage as a starting point; an intermediate point registration function of position-registering a shape feature point that prescribes a shape of the work field as an intermediate point; an end point registration function of position-registering a second endpoint facing the first endpoint on a side of the boundary of the entrance passage as an end point; a basic shape calculation function of calculating a basic shape of the work field by connecting a position of the starting point, a position of the intermediate point, and a position of the end point; an entrance passage information generation function of generating entrance passage information with a quadrangle as a shape of the entrance passage, the quadrangle having the starting point and the end point as opposite vertices and having two sides along an external shape extension line of the basic shape; and a travel route generation function of defining a region other than the entrance passage of the work field as a target work region, and generating a travel route for the work vehicle to automatically travel in the target work region. Functions and effects of this travel route generation program may be identical to functions and effects of the above-described travel route generation device. In addition, the above-described examples of the travel route generation device may also be applicable to this travel route generation program.

In various embodiments and examples described herein, a "function" of a computer program product may be understood as indicating a group of computer-readable instructions that, when loaded and run on a computer, cause the computer to execute one or more process steps defined by the instructions. Accordingly, in various embodiments and examples described herein, the term "function" is not limited to a function, module, class, method or the like of any specific programming language.

Similarly, the present disclosure may also be applied to a computer program product for travel route generation, which may cause a computer to calculate a shape of an arbitrary region in the work field as a target work region and generates a travel route independently of the entrance. This computer program product for travel route generation for a work vehicle may cause a computer to execute: a starting point registration function of position-registering a first endpoint of a target work region for work travel as a starting point; an intermediate point registration function of position-registering a shape feature point that prescribes a shape of the target work region as an intermediate point; an end point registration function of position-registering the first endpoint or a second endpoint adjacent to the first endpoint as an end point; a basic shape calculation function of calculating a basic shape of the target work region by connecting a position of the starting point, a position of the intermediate point, and a position of the end point; a travel route generation function of generating a travel route for the work vehicle to automatically travel in the target work region; and a function of calculating the positions of the starting point, the intermediate point, and the end point, by modifying an own position according to distances from the own position to one or more aiming points associated with the positions of the starting point, the intermediate point, and the end point, the aiming points being prescribed at corners of the work vehicle or a vehicle capable of traveling in the target work region. Functions and effects of this computer program product for travel route generation may also be identical to the functions and effects of the above-described travel route generation device. In addition, the above-described examples of the travel route generation device may also be applicable to this computer program product for travel route generation.

According to yet another aspect, a computer implemented method is provided for travel route generation for a work vehicle that enters and leaves a work field divided by a boundary through an entrance passage. The method may comprise the following:
position-registering a first endpoint on a side of the boundary of the entrance passage as a starting point;
position-registering a shape feature point that prescribes a shape of the work field as an intermediate point;
position-registering a second endpoint facing the first endpoint on a side of the boundary of the entrance passage as an end point;
calculating a basic shape of the work field by connecting a position of the starting point, a position of the intermediate point, and a position of the end point;
generating entrance passage information with a quadrangle as a shape of the entrance passage, the quadrangle having the starting point and the end point as opposite vertices and having two sides along an external shape extension line of the basic shape; and
defining a region other than the entrance passage of the work field as a target work region, and generating a travel route for the work vehicle to automatically travel in the target work region.

According to yet another aspect, a computer-implemented method for travel route generation for a work vehicle is provided. The method may comprise the following:
position-registering a first endpoint of a target work region for work travel as a starting point;
position-registering a shape feature point that prescribes a shape of the target work region as an intermediate point;
position-registering one of the first endpoint and a second endpoint adjacent to the first endpoint as an end point;
calculating a basic shape of the target work region by connecting a position of the starting point, a position of the intermediate point, and a position of the end point;
generating a travel route for the work vehicle to automatically travel in the target work region; and
calculating the positions of the starting point, the intermediate point, and the end point, by modifying an own position according to distances from the own position to one or more aiming points associated with the positions of the starting point, the intermediate point, and the end point, the aiming points being prescribed at corners of one of the work vehicle and a vehicle capable of traveling in the target work region.

The subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. Further subject matter described in the application can be implemented using various machines.

### [Brief Description of Drawings]

Details of one or more implementations are set forth in the exemplary drawings and description below. Other features will be apparent from the description, the drawings, and from the claims. It should be understood, however, that even though embodiments are separately described, single features of different embodiments may be combined to further embodiments.

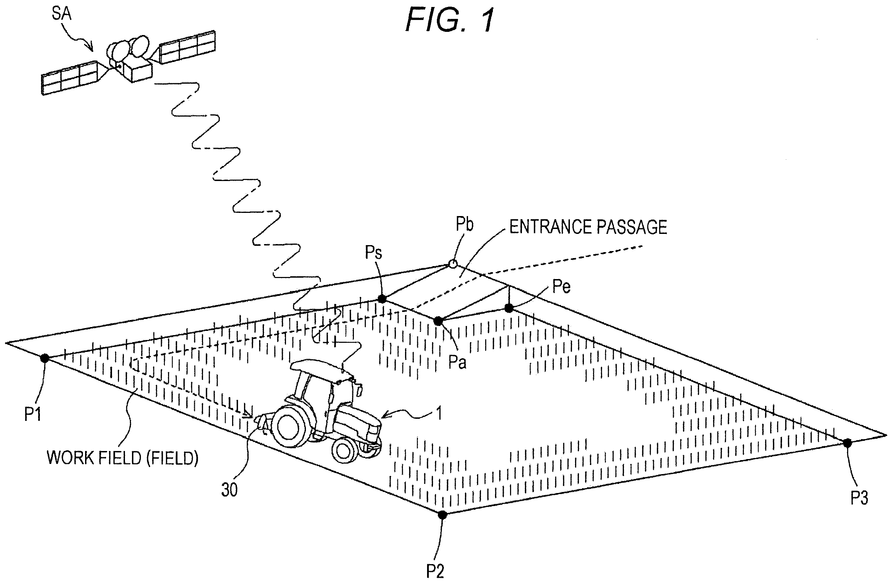

Fig. 1 is a schematic view illustrating how a work vehicle may enter a work field divided by a ridge through an entrance passage and measure a shape of the work field.
Fig. 2 is a side view of a tractor, which is one example of the work vehicle.
Fig. 3 is a functional block diagram illustrating exemplary control function units that function as a travel route generation device.
Fig. 4 is a flowchart illustrating an exemplary process of calculating shapes of the work field and the entrance passage in the travel route generation device.
Fig. 5 is a schematic view illustrating an exemplary relationship between aiming points set in the tractor and aiming point selection buttons displayed on a touch panel.

### [Description of Embodiments]

One exemplary embodiment of a work vehicle equipped with a travel route generation device according to the present invention will be described with reference to the drawings. In this exemplary embodiment, the work vehicle is a tractor equipped with a work device 30 in a vehicle body 1. To begin with, the tractor may be operated by a user to perform teaching travel for calculating a field shape. In this teaching travel, the tractor may enter a field through an entrance passage inclined downward from a farm road, and perform circumferential travel along a boundary of the field divided by a ridge. At that time, as will be described in detail later, a first endpoint on a ridge side of the entrance passage may be position-registered as a starting point Ps, shape feature points that prescribe the field shape may be position-registered as intermediate points P1, P2, and P3, and a second endpoint facing the first endpoint on the ridge side of the entrance passage may be position-registered as an end point Pe. A basic shape of the field may be calculated by a line that connects the starting point Ps, the intermediate points P1, P2, and P3, and the end point Pe. A region obtained by excluding the entrance passage from this basic shape of the field may be referred to as a target work region. Furthermore, a shape of the entrance passage may be regarded as a quadrangle, a vertex that is adjacent to the target work region in vertices other than the starting point Ps and the end point Pe may be defined as an inner point Pa, and a vertex distant from the target work region may be defined as an outer point Pb.

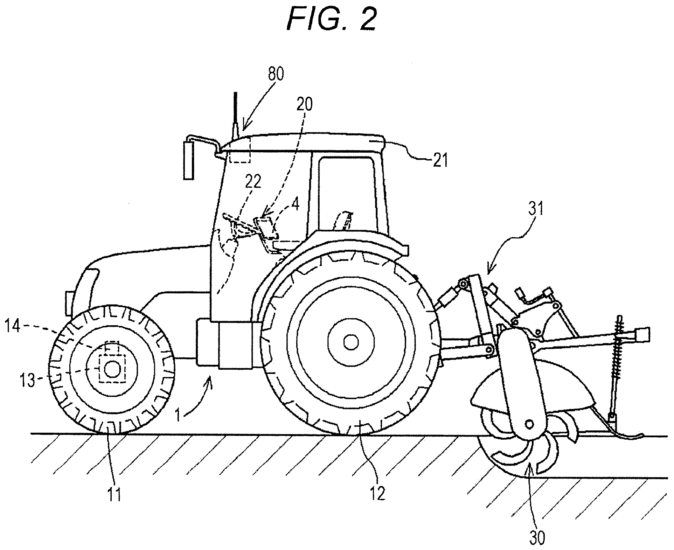

As illustrated in Fig. 2, this exemplary tractor may be provided with a cab 20 in a central portion of the vehicle body 1 supported by front wheels 11 and rear wheels 12. The tractor may be equipped with the work device 30, which in this example is a rotary tilling machine, via a hydraulic lifting mechanism 31 at a rear of the vehicle body 1. The front wheels 11 may function as steering control wheels through which the tractor changes a travel direction when a steering angle of the steering control wheels is changed. The steering angle of the front wheels 11 may be changed by an operation of a steering mechanism 13. The steering mechanism 13 may include a steering motor 14 for automatic steering. For manual traveling, the front wheels 11 can be steered by operating a steering wheel 22 disposed in the cab 20. The cab 20 may be equipped with a general purpose terminal 4 that may provide a user with information and receive instructions from the user. The general purpose terminal 4 may be implemented by one or more processors and one or more storage devices, such as a memory, coupled to the one or more processors. In a cabin 21 of the tractor, a satellite positioning module 80 may be provided. As a component of the satellite positioning module 80, a satellite antenna for receiving a global navigation satellite system (GNSS) signal (including a GPS signal) may be attached at a ceiling area of the cabin 21. Note that the satellite positioning module 80 may be combined with an inertial navigation module incorporated with a gyro acceleration sensor and/or a magnetic director sensor for complementing satellite navigation. As a matter of course, the inertial navigation module may be provided in a different location from the location of the satellite positioning module 80.

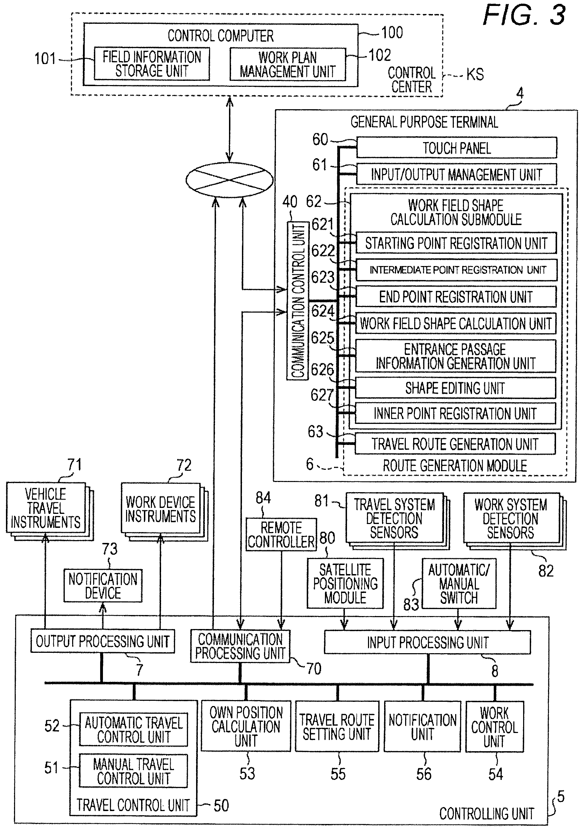

Fig. 3 illustrates an exemplary control system configured in this tractor. The control system of this exemplary embodiment may include a first control unit, which may be the general purpose terminal 4 including a graphical user interface, a controlling unit 5 that may control the vehicle body 1 and the work device 30 of the tractor, and/or a remote controller 84 for wirelessly controlling travel start and travel stop of the tractor from outside. The travel route generation device according to the present invention may be modularized as a route generation module 6, and be incorporated into the general purpose terminal 4.

In addition to the route generation module 6, the general purpose terminal 4 may have functions of a general computer system, such as a communication control unit 40, a touch panel 60, and an input/output management unit 61 that manages an input operation on the touch panel 60 and/or information display on the touch panel 60. The general purpose terminal 4 may be coupled to the controlling unit 5 in such a manner that the general purpose terminal 4 can exchange data by vehicle-mounted LAN, wireless communication, cable communication, or the like. Furthermore, the general purpose terminal 4 can exchange data with a control computer 100 configured in a remote control center KS via a wireless channel or the Internet. In addition, it is also possible to carry the general purpose terminal 4 out of the tractor for use if the general purpose terminal 4 is configured as a device such as a tablet computer and a cellular phone and is data-exchangably coupled to the control system of the tractor.

In this exemplary embodiment, field information including a position of the field on a map and arrangement of farm roads surrounding the field may be stored in a field information storage unit 101 of the control computer 100, and this field information may be needed for finding out the field to work. The control computer 100 may also include a work plan management unit 102 that manages a work plan describing the work in a specified field. The general purpose terminal 4 can access the control computer 100, and download the field information from the field information storage unit 101 and the work plan from the work plan management unit 102. Alternatively, the general purpose terminal 4 can also input the field information and the work plan via a recording medium such as a USB memory.

The route generation module 6 may include a work field shape calculation submodule 62 that calculates a shape of the target work region, which is a valid work region of the field, through the teaching travel, and/or a travel route generation unit 63 that generates a travel route for the tractor to travel in the target work region. The work field shape calculation submodule 62 may include a starting point registration unit 621, an intermediate point registration unit 622, an end point registration unit 623, a basic shape calculation unit 624, an entrance passage information generation unit 625, and/or a shape editing unit 626. Furthermore, an inner point registration unit 627 may also be prepared as an option.

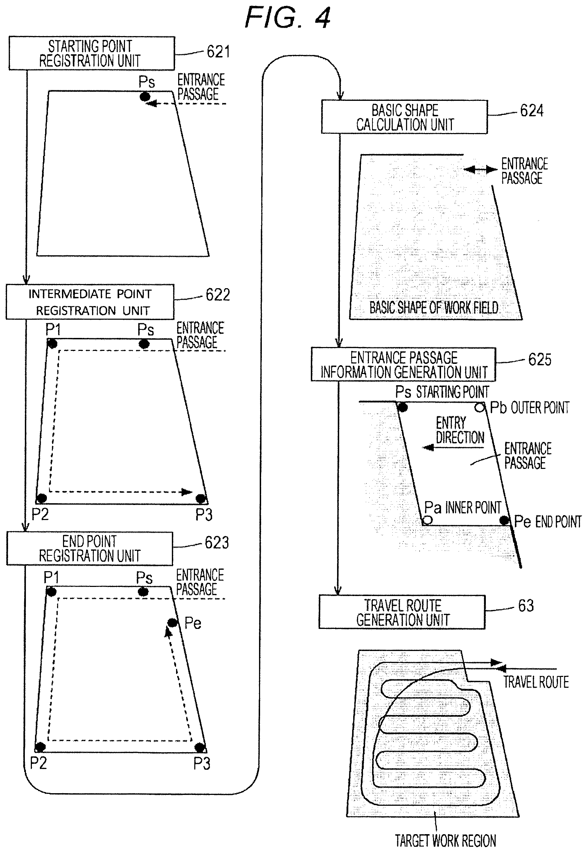

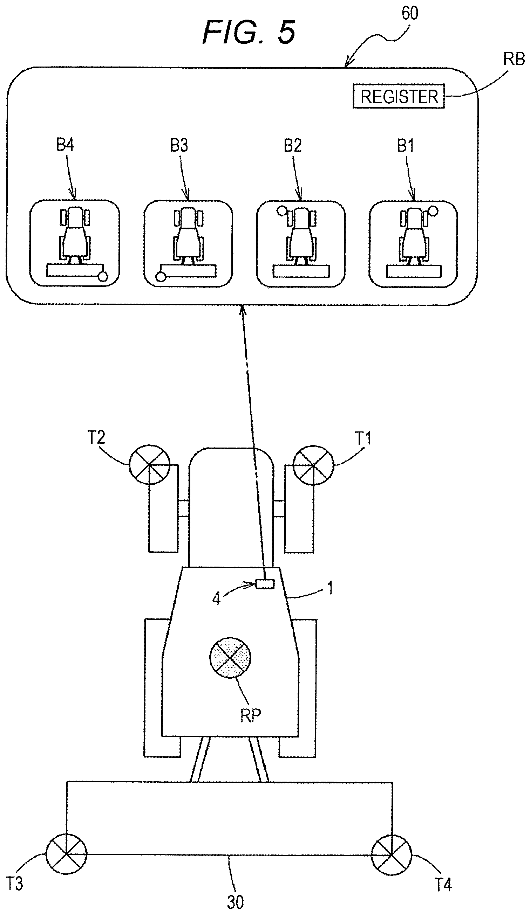

Next, a basic role of each functional unit of the route generation module 6 will be described with reference to a flowchart of an exemplary field shape calculation process and a travel route generation process illustrated in Fig. 4. In the example shown in Fig. 4, the field shape is a trapezoid, and an entrance passage inclined downward is provided at a right end of an upper side. Furthermore, as illustrated in Fig. 5, aiming points T1, T2, T3, and T4 may be prescribed at four corners of the tractor. Distances between these aiming points T1, T2, T3, and T4 and the own position based on positioning data from the satellite positioning module 80 (illustrated with a black dot at the center of the vehicle body in Fig. 5) may be set in advance. Position coordinates of the aiming points T1, T2, T3, and T4 can be calculated from the own position. The touch panel 60 may display aiming point selection buttons B1, B2, B3, and B4, and the aiming point corresponding to the pushed aiming point selection button B1, B2, B3, or B4 may become valid in the following field shape calculation process.

The tractor that passes through a farm road and reaches the target field may perform teaching travel in order to calculate the shape of the field. Here, in this specific example, assume that the aiming point selection button B1 is pushed, and the aiming point T1 is valid.

To begin with, a driver may operate the tractor such that the tractor passes through the entrance passage and that the aiming point T1 comes to a right end (e.g. first endpoint) after going down the entrance passage. The driver then may push a registration button RB displayed on the touch panel 60 (see Fig. 5). Accordingly, the starting point registration unit 621 may register the first endpoint as a starting point (illustrated with a black dot and Ps in Fig. 4).

Next, the driver may advance the tractor such that the aiming point T1 comes to a left end of the upper side, which may be a shape feature point of the field (e.g. geometrical shape body, here, a vertex of the trapezoid), and may then push the registration button RB. Accordingly, the intermediate point registration unit 622 may register the left end of the upper side as a first intermediate point (illustrated with a black dot and P1 in Fig. 4). Furthermore, the driver may advance the tractor such that the aiming point T1 comes to a left end of a lower side, and may then push the registration button RB. Accordingly, the intermediate point registration unit 622 may register the left end of the lower side as a second intermediate point (illustrated with a black dot and P2 in Fig. 4). Furthermore, the driver may advance the tractor such that the aiming point T1 comes to a right end of the lower side, and may then push the registration button RB. Accordingly, the intermediate point registration unit 622 may register the right end of the lower side as a third intermediate point (illustrated with a black dot and P3 in Fig. 4).

Next, the driver may advance the tractor along the ridge (e.g. boundary) from the right end of the lower side of the field at which the third intermediate point may be set, stop the tractor at a position at which the aiming point T1 comes to an endpoint that is an intersection of the entrance passage and the boundary, and may then push the registration button RB. Since the position at which the registration button RB is pushed is close to the starting point, the end point registration unit 623 may regard this position as an end point (illustrated with a black dot and Pe in Fig. 4) and register the position. Alternatively, the driver may instruct the end point registration unit 623 that the registered position is the end point, by performing an instruction operation of indicating the end point and then pushing the registration button RB.

Accordingly, position coordinates of the starting point, the three intermediate points, and the end point may be obtained. The basic shape calculation unit 624 may connect these points to calculate the basic shape of the work field.

Next, the entrance passage information generation unit 625 may generate entrance passage information, such as a shape and size of the entrance passage and a travel direction in the entrance passage. As illustrated in Fig. 4, since the entrance passage may be a partial passage, the entrance passage may be substantially regarded as a quadrangle. Two opposite vertices of this quadrangle indicating the entrance passage may be the starting point and the end point (illustrated with black dots and Ps and Pe in Fig. 4). Therefore, the shape and size of the entrance passage may be obtained by calculating two more vertices. Therefore, when this quadrangle indicating the entrance passage is regarded as a parallelogram (e.g. including a rectangle and a square) with extension lines of the boundary lines of the adjacent field (e.g. external shape extension lines of the work field basic shape) as two sides, position coordinates of a vertex inside the field (referred to as an outer point) and a vertex outside the field (referred to as an inner point) can be easily calculated by geometric calculation. In Fig. 4, the inner point is illustrated with a white circle and Pa, while the outer point is illustrated with a white circle and Pb. Furthermore, a direction from a side that connects the outer point and the end point to a side that connects the starting point and the inner point can be regarded as an entry direction (e.g. travel direction) of the tractor into the field.

A region other than the entrance passage in the field, in other words, for example, the target work region which is the valid work region may be prescribed by a contour line obtained by connecting the starting point, the three intermediate points, the end point, and the inner point. This contour line, which may be substantially obtained by traveling of the tractor, is not necessarily accurate. For example, when there are recessed or protruding sections over which the tractor cannot travel, such recessed or protruding sections may be neglected. Therefore, the shape editing unit 626 may be provided that modifies the contour line obtained by connecting the starting point, the three intermediate points, the end point, and the inner point. This shape editing unit 626 may enable the user to edit the contour line displayed on the touch panel 60, for example, in a manner of editing a Bezier curve.

Note that when the optional inner point registration unit 627 can be used, after registration of the end point, the driver may further operate the tractor such that the aiming point T1 comes to a right end (e.g. first endpoint) downward along the entrance passage to an endpoint inside the boundary line of the entrance passage and the target work region, stop the tractor at a position to which the aiming point T1 comes, and then push the registration button RB. Accordingly, the inner point registration unit 627 may register the position as the inner point (illustrated with a white circle and Pa in Fig. 4).

Although only the aiming point T1 has been used in the above description, the other aiming points T2, T3, and/or T4 may be able to easily approach a target position in some cases. In particular, when approaching backward, the aiming points T3 and/or T4 may be convenient. In such a case, selecting and pushing a button corresponding to the desired aiming point from the aiming point selection buttons B1, B2, B3, and B4 may cause the valid aiming point to be changed.

When the target work region is determined, the travel route generation unit 63 may generate the travel route for the work vehicle to automatically travel in the target work region. In the example shown in Fig. 4, the travel route to be generated includes an inside travel route including straight movement routes and U-turn routes that connect the straight movement routes, and a circumferential travel route for performing circumferential travel in an outer region of the field. As a matter of course, instead of this, an algorithm may be employed that generates a spiral travel route along which the tractor travels spirally in the field, and other travel routes.

As illustrated in Fig. 3, the controlling unit 5, which may be a core element of the control system of the tractor, may include an output processing unit 7 and/or an input processing unit 8, which respectively may function as input and output interfaces, and/or a communication processing unit 70. The output processing unit 7 may be coupled to devices equipped in the tractor, such as vehicle travel instruments 71, work device instruments 72, and/or a notification device 73. The vehicle travel instruments 71 may include, but are not limited to, the steering motor 14, and although not illustrated, devices to be controlled for allowing the vehicle to travel, such as a transmission mechanism and an engine unit. The work device instruments 72 may include, but are not limited to, devices such as a drive mechanism for the work device 30 and the lifting mechanism 31 that raises and lowers the work device 30. The notification device 73 may include, but is not limited to, a display, lamps, and/or a speaker. The notification device 73 may be used for notifying the driver and/or supervisor of attention information and/or warning information, such as travel precautions and/or deviation from the target travel route when the work vehicle is automatically steered. The communication processing unit 70 may have a function of transmitting data processed by the controlling unit 5 to the control computer 100, and receiving various kinds of data from the control computer 100. Furthermore, the communication processing unit 70 may input remote control instructions from the remote controller 84.

The input processing unit 8 may be coupled to, for example, the satellite positioning module 80, travel system detection sensors 81, work system detection sensors 82, and/or an automatic/manual switch 83. The travel system detection sensors 81 may include, but are not limited to, sensors for detecting travel states such as an engine speed and a transmission state. The work system detection sensors 82 may include sensors for detecting a position and/or inclination of the work device 30, sensors for detecting workloads, and the like. The automatic/manual switch 83 may be a switch for selecting either an automatic travel mode for traveling with automatic steering or a manual steering mode for traveling with manual steering.

Furthermore, the controlling unit 5 may include a travel control unit 50, a work control unit 54, an own position calculation unit 53, a travel route setting unit 55, and/or a notification unit 56. Based on positioning data sent from the satellite positioning module 80, the own position calculation unit 53 may calculate the own position. During the above-described teaching travel, the calculated own position may be provided to the work field shape calculation submodule. Since the automatic travel (e.g. automatic steering) mode and the manual travel (e.g. manual steering) mode may be both configured to be available in this exemplary tractor for traveling, the travel control unit 50 for controlling the vehicle travel instruments 71 may include a manual travel control unit 51 and an automatic travel control unit 52. In accordance with operations of the driver, the manual travel control unit 51 may control the vehicle travel instruments 71. The automatic travel control unit 52 may calculate discrepancies in direction and position between the travel route that is set by the travel route setting unit 55 and the own position, and generate an automatic steering instruction. This automatic steering instruction may be output to the steering motor 14 via the output processing unit 7. The automatic travel control unit 52 may stop the tractor on the basis of a stop instruction from the remote controller 84, and cause the tractor to start travel on the basis of a starting instruction from the remote controller 84. To control movement of the work device 30, the work control unit 54 may provide control signals to the work device instruments 72. The notification unit 56 may generates notification signals (e.g. display data and/or voice data) for notifying information necessary for the driver and/or the supervisor, and provide the notification signals to the notification device 73 incorporated into an instruments panel.

The travel route setting unit 55 may receive the travel route generated by the route generation module 6 via the communication processing unit 70 from the travel route generation unit 63 of the general purpose terminal 4. The travel route setting unit 55 may then set the travel route as a target travel route for the tractor.

### [Other Embodiments]

(1) In the above-described exemplary embodiment, the position and shape of the entrance of the work field may be calculated, the target work region, which may be a region obtained by excluding the entrance from the work field, may be calculated, and the travel route for automatically traveling in the target work region may be generated. Instead of this exemplary embodiment, an exemplary embodiment may be employed that calculates a shape of an arbitrary region in the work field as the target work region and generates the travel route independently of the entrance. In such a travel route generation device, the entrance passage information generation unit 625 and the inner point registration unit 627 become unnecessary in the work field shape calculation submodule 62 of the route generation module 6.
(2) In the above-described exemplary embodiment, the tractor used for actual work may be equipped with the route generation module 6, and the aiming points T1, T2, T3, and T4 may also be prescribed at corners of the tractor. Instead of this, a vehicle other than the tractor, for example, a multiple-purpose vehicle that can travel in the work field (e.g. field) at a higher speed and includes a satellite positioning function may be equipped with the route generation module 6 and/or the work field shape calculation submodule 62 to calculate the shape of the work field (e.g. field).
(3) Functional units in the functional block diagram illustrated in Fig. 3 are classified mainly for purposes of description. Actually, each functional unit can be integrated with other functional units or divided into a plurality of functional units. For example, the route generation module 6, in particular, the travel route generation unit 63 may be configured within the controlling unit 5 of the work vehicle.
(4) The tractor equipped with the rotary tilling machine as the work device 30 has been described as the work vehicle in the above-described exemplary embodiment. In addition to such a tractor, for example, the exemplary embodiment is applicable to agricultural vehicles including rice transplanters, fertilizer distributors, and combines.

### [Industrial Applicability]

The travel route generation device according to the present invention is applicable to the work vehicle that works along the set travel route in the work field.

### [Reference Signs List]

5: controlling unit
50: travel control unit
53: own position calculation unit
55: travel route setting unit
80: satellite positioning module
6: route generation module
60: touch panel
61: input/output management unit
62: work field shape calculation submodule
621: starting point registration unit
622: intermediate point registration unit
623: end point registration unit
624: basic shape calculation unit
625: entrance passage information generation unit
626: shape editing unit
627: inner point registration unit
63: travel route generation unit
Ps: starting point
P1: intermediate point
P2: intermediate point
P3: intermediate point
Pe: end point
Pa: inner point
Pb: outer point

## Claims

1. A travel route generation device for a work vehicle that enters and leaves a work field divided by a boundary through an entrance passage, the travel route generation device comprising:
a starting point registration unit (621) that is configured to position-register a first endpoint on a side of the boundary of the entrance passage as a starting point (Ps);
an intermediate point registration unit (622) that is configured to position-register a shape feature point that prescribes a shape of the work field as an intermediate point (P1, P2, P3);
an end point registration unit (623) that is configured to position-register a second endpoint facing the first endpoint on a side of the boundary of the entrance passage as an end point (Pe);
a basic shape calculation unit (624) that is configured to calculate a basic shape of the work field by connecting a position of the starting point (Ps), a position of the intermediate point (P1, P2, P3), and a position of the end point (Pe);
an entrance passage information generation unit (625) that is configured to generate entrance passage information with a quadrangle as a shape of the entrance passage, the quadrangle having the starting point (Ps) and the end point (Pe) as opposite vertices and having two sides along an external shape extension line of the basic shape; and
a travel route generation unit (63) that is configured to define a region other than the entrance passage of the work field as a target work region, and to generate a travel route for the work vehicle to automatically travel in the target work region.

2. The travel route generation device according to claim 1, wherein
the entrance passage information generation unit (625) is configured to define vertices other than the starting point (Ps) and the end point (Pe) of the quadrangle representing the shape of the entrance passage as an inner point (Pa) that is adjacent to the target work region and an outer point (Pb) distant from the target work region, and
a direction from a side connecting the outer point (Pb) and the end point (Pe) to a side connecting the starting point (Ps) and the inner point (Pa) is an entry direction of the work vehicle into the target work region.

3. The travel route generation device according to claim 2, further comprising an inner point registration unit (627) that is configured to register the inner point (Pa).

4. The travel route generation device according to claim 1, further comprising an inner point registration unit (627) that is configured to define vertices other than the starting point (Ps) and the end point (Pe) of the quadrangle representing the shape of the entrance passage as an inner point (Pa) that is adjacent to the target work region and an outer point (Pb) distant from the target work region, and to register the inner point (Pa).

5. The travel route generation device according to any one of claims 1 to 4, wherein
position-registration of the starting point (Ps), the intermediate point (P1, P2, P3), and the end point (Pe) is performed through traveling of the work vehicle along the boundary, and
the positions of the starting point (Ps), the intermediate point (P1, P2, P3), and the end point (Pe) are calculated using an own position based on positioning data from a satellite positioning module (80) mounted on the work vehicle.

6. The travel route generation device according to claim 5, wherein
one or more aiming points associated with the positions of the starting point (Ps), the intermediate point (P1, P2, P3), and the end point (Pe) are prescribed at corners of the work vehicle, and
the positions of the starting point (Ps), the intermediate point (P1, P2, P3), and the end point (Pe) are calculated by modifying the own position according to distances from the own position to the aiming points.

7. A travel route generation device for a work vehicle, comprising:
a starting point registration unit (621) that is configured to position-register a first endpoint of a target work region for work travel as a starting point (Ps);
an intermediate point registration unit (622) that is configured to position-register a shape feature point that prescribes a shape of the target work region as an intermediate point (P1, P2, P3);
an end point registration unit (623) that is configured to position-register one of the first endpoint and a second endpoint adjacent to the first endpoint as an end point (Pe);
a basic shape calculation unit (624) that is configured to calculate a basic shape of the target work region by connecting a position of the starting point (Ps), a position of the intermediate point (P1, P2, P3), and a position of the end point (Pe); and
a travel route generation unit (63) that is configured to generate a travel route for the work vehicle to automatically travel in the target work region,
wherein one or more aiming points associated with the positions of the starting point (Ps), the intermediate point (P1, P2, P3), and the end point (Pe) are prescribed at corners of one of the work vehicle and a vehicle capable of traveling in the target work region, and
the positions of the starting point (Ps), the intermediate point (P1, P2, P3), and the end point (Pe) are calculated by modifying an own position according to distances from the own position to the aiming points.

8. The travel route generation device according to claim 6 or 7, wherein
a plurality of the aiming points are prescribed, and
a valid aiming point is selectable from among the plurality of aiming points.

9. A computer program product for travel route generation for a work vehicle that enters and leaves a work field divided by a boundary through an entrance passage, the travel route generation program for causing a computer to execute:
a starting point registration function of position-registering a first endpoint on a side of the boundary of the entrance passage as a starting point (Ps);
an intermediate point registration function of position-registering a shape feature point that prescribes a shape of the work field as an intermediate point (P1, P2, P3);
an end point registration function of position-registering a second endpoint facing the first endpoint on a side of the boundary of the entrance passage as an end point (Pe);
a basic shape calculation function of calculating a basic shape of the work field by connecting a position of the starting point (Ps), a position of the intermediate point (P1, P2, P3), and a position of the end point (Pe);
an entrance passage information generation function of generating entrance passage information with a quadrangle as a shape of the entrance passage, the quadrangle having the starting point (Ps) and the end point (Pe) as opposite vertices and having two sides along an external shape extension line of the basic shape; and
a travel route generation function of defining a region other than the entrance passage of the work field as a target work region, and generating a travel route for the work vehicle to automatically travel in the target work region.

10. A computer program product for travel route generation for a work vehicle, the travel route generation program for causing a computer to execute:
a starting point registration function of position-registering a first endpoint of a target work region for work travel as a starting point (Ps);
an intermediate point registration function of position-registering a shape feature point that prescribes a shape of the target work region as an intermediate point (P1, P2, P3);
an end point registration function of position-registering one of the first endpoint and a second endpoint adjacent to the first endpoint as an end point (Pe);
a basic shape calculation function of calculating a basic shape of the target work region by connecting a position of the starting point (Ps), a position of the intermediate point (P1, P2, P3), and a position of the end point (Pe);
a travel route generation function of generating a travel route for the work vehicle to automatically travel in the target work region; and
a function of calculating the positions of the starting point (Ps), the intermediate point (P1, P2, P3), and the end point (Pe), by modifying an own position according to distances from the own position to one or more aiming points associated with the positions of the starting point (Ps), the intermediate point (P1, P2, P3), and the end point (Pe), the aiming points being prescribed at corners of one of the work vehicle and a vehicle capable of traveling in the target work region.

11. A computer-implemented method for travel route generation for a work vehicle that enters and leaves a work field divided by a boundary through an entrance passage, the method comprising:
position-registering a first endpoint on a side of the boundary of the entrance passage as a starting point (Ps);
position-registering a shape feature point that prescribes a shape of the work field as an intermediate point (P1, P2, P3);
position-registering a second endpoint facing the first endpoint on a side of the boundary of the entrance passage as an end point (Pe);
calculating a basic shape of the work field by connecting a position of the starting point (Ps), a position of the intermediate point (P1, P2, P3), and a position of the end point (Pe);
generating entrance passage information with a quadrangle as a shape of the entrance passage, the quadrangle having the starting point (Ps) and the end point (Pe) as opposite vertices and having two sides along an external shape extension line of the basic shape; and
defining a region other than the entrance passage of the work field as a target work region, and generating a travel route for the work vehicle to automatically travel in the target work region.

12. A computer-implemented method for travel route generation for a work vehicle, the method comprising:
position-registering a first endpoint of a target work region for work travel as a starting point (Ps);
position-registering a shape feature point that prescribes a shape of the target work region as an intermediate point (P1, P2, P3);
position-registering one of the first endpoint and a second endpoint adjacent to the first endpoint as an end point (Pe);
calculating a basic shape of the target work region by connecting a position of the starting point (Ps), a position of the intermediate point (P1, P2, P3), and a position of the end point (Pe);
generating a travel route for the work vehicle to automatically travel in the target work region; and
calculating the positions of the starting point (Ps), the intermediate point (P1, P2, P3), and the end point (Pe), by modifying an own position according to distances from the own position to one or more aiming points associated with the positions of the starting point (Ps), the intermediate point (P1, P2, P3), and the end point (Pe), the aiming points being prescribed at corners of one of the work vehicle and a vehicle capable of traveling in the target work region.

## Patentansprüche

1. Vorrichtung zum Generieren eines Fahrtweges für ein Arbeitsfahrzeug, das durch eine Zufahrt auf ein Arbeitsfeld, das von einer Grenze geteilt ist, fährt und dieses verlässt, wobei die Vorrichtung zum Generieren des Fahrtweges umfasst:
eine Einheit (621) zum Registrieren eines Anfangspunkts, die ausgestaltet ist, die Position eines ersten Endpunkts auf einer Seite der Grenze der Zufahrt als ein Anfangspunkt (Ps) zu registrieren;
eine Einheit (622) zum Registrieren eines Zwischenpunkts, die ausgestaltet ist, die Position eines Formmerkmalspunkts, der eine Form des Arbeitsfeldes vorschreibt, als ein Zwischenpunkt (P1, P2, P3) zu registrieren;
eine Einheit (623) zum Registrieren eines Endpunkts, die ausgestaltet ist, die Position eines zweiten Endpunkts, der dem ersten Endpunkt auf einer Seite der Grenze der Zufahrt gegenüberliegt, als ein Endpunkt (Pe) zu registrieren;
eine Einheit (624) zum Berechnen einer Grundform, die ausgestaltet ist, eine Grundform des Arbeitsfeldes durch Verbinden einer Position des Anfangspunkts (Ps), einer Position des Zwischenpunkts (P1, P2, P3) und einer Position des Endpunkts (Pe) zu berechnen;
eine Einheit (625) zum Generieren von Zufahrtsinformationen, die ausgestaltet ist, Zufahrtsinformationen mit einem Viereck als eine Form der Zufahrt zu generieren, wobei das Viereck den Anfangspunkt (Ps) und den Endpunkt (Pe) als entgegengesetzte Ecken aufweist und zwei Seiten entlang einer äußeren Formausdehnungslinie der Grundform aufweist; und
eine Einheit (63) zum Generieren eines Fahrtweges, die ausgestaltet ist, einen Bereich, der sich von der Zufahrt des Arbeitsfeldes unterscheidet, als ein Zielarbeitsbereich zu definieren und einen Fahrtweg für das Arbeitsfahrzeug zum automatischen Fahren in dem Zielarbeitsbereich zu generieren.

2. Vorrichtung zum Generieren eines Fahrtweges nach Anspruch 1, wobei
die Einheit (625) zum Generieren der Zufahrtsinformationen ausgestaltet ist, Ecken, die sich von dem Anfangspunkt (Ps) und dem Endpunkt (Pe) des Vierecks, das die Form der Zufahrt darstellt, unterscheiden, als ein innerer Punkt (Pa), der dem Zielarbeitsbereich benachbart ist, und ein äußerer Punkt (Pb) zu definieren, der von dem Zielarbeitsbereich entfernt ist, und
eine Richtung von einer Seite, die den äußeren Punkt (Pb) und den Endpunkt (Pe) verbindet, zu einer Seite, die den Anfangspunkt (Ps) und den inneren Punkt (Pa) verbindet, eine Einfahrtsrichtung des Arbeitsfahrzeugs in den Zielarbeitsbereich ist.

3. Vorrichtung zum Generieren eines Fahrtweges nach Anspruch 2, die überdies eine Einheit (627) zum Registrieren eines inneren Punkts umfasst, die ausgestaltet ist, den inneren Punkt (Pa) zu registrieren.

4. Vorrichtung zum Generieren eines Fahrtweges nach Anspruch 1, die überdies eine Einheit (627) zum Registrieren eines inneren Punkts umfasst, die ausgestaltet ist, Ecken, die sich von dem Anfangspunkt (Ps) und dem Endpunkt (Pe) des Vierecks, das die Form der Zufahrt darstellt, unterscheiden, als ein innerer Punkt (Pa), der dem Zielarbeitsbereich benachbart ist, und ein äußerer Punkt (Pb) zu definieren, der von dem Zielarbeitsbereich entfernt ist, und den inneren Punkt (Pa) zu registrieren.

5. Vorrichtung zum Generieren eines Fahrtweges nach einem der Ansprüche 1 bis 4, wobei
das Registrieren der Position des Anfangspunkts (Ps), des Zwischenpunkts (P1, P2, P3) und des Endpunkts (Pe) durch Fahren des Arbeitsfahrzeugs entlang der Grenze durchgeführt wird, und
die Positionen des Anfangspunkts (Ps), des Zwischenpunkts (P1, P2, P3) und des Endpunkts (Pe) unter Verwendung einer eigenen Position basierend auf Positionierungsdaten von einem Satellitenpositionierungsmodul (80) berechnet werden, das an dem Arbeitsfahrzeug montiert ist.

6. Vorrichtung zum Generieren eines Fahrtweges nach Anspruch 5, wobei
ein oder mehrere Zielpunkte, die den Positionen des Anfangspunkts (Ps), des Zwischenpunkts (P1, P2, P3) und des Endpunkts (Pe) zugehörig sind, an Ecken des Arbeitsfahrzeugs vorgeschrieben sind, und
die Positionen des Anfangspunkts (Ps), des Zwischenpunkts (P1, P2, P3) und des Endpunkts (Pe) durch Ändern der eigenen Position gemäß Abständen von der eigenen Position zu den Zielpunkten berechnet werden.

7. Vorrichtung zum Generieren eines Fahrtweges für ein Arbeitsfahrzeug, umfassend:
eine Einheit (621) zum Registrieren eines Anfangspunkts, die ausgestaltet ist, eine Position eines ersten Endpunkts eines Zielarbeitsbereichs zur Arbeitsfahrt als ein Anfangspunkt (Ps) zu definieren;
eine Einheit (622) zum Registrieren eines Zwischenpunkts, die ausgestaltet ist, die Position eines Formmerkmalspunkts, der eine Form des Zielarbeitsbereichs vorschreibt, als ein Zwischenpunkt (P1, P2, P3) zu registrieren;
eine Einheit (623) zum Registrieren eines Endpunkts, die ausgestaltet ist, eines von dem ersten Endpunkt und einem zweiten Endpunkt, der dem ersten Endpunkt benachbart ist, als ein Endpunkt (Pe) zu registrieren;
eine Einheit (624) zum Berechnen einer Grundform, die ausgestaltet ist, eine Grundform des Zielarbeitsbereichs durch Verbinden einer Position des Anfangspunkts (Ps), einer Position des Zwischenpunkts (P1, P2, P3) und einer Position des Endpunkts (Pe) zu berechnen; und
eine Einheit (63) zum Generieren eines Fahrtweges, die ausgestaltet ist, einen Fahrtweg für das Arbeitsfahrzeug zu generieren, um automatisch in dem Zielarbeitsbereich zu fahren,
wobei einer oder mehrere Zielpunkte, die den Positionen des Anfangspunkts (Ps), des Zwischenpunkts (P1, P2, P3) und des Endpunkts (Pe) zugehörig sind, an Ecken von einem von dem Arbeitsfahrzeug und einem Fahrzeug vorgeschrieben sind, das in der Lage ist, in dem Zielarbeitsbereich zu fahren; und
die Positionen des Anfangspunkts (Ps), des Zwischenpunkts (P1, P2, P3) und des Endpunkts (Pe) durch Ändern einer eigenen Position gemäß Abständen von der eigenen Position zu den Zielpunkten berechnet werden.

8. Vorrichtung zum Generieren eines Fahrtweges nach Anspruch 6 oder 7, wobei
eine Vielzahl von den Zielpunkten vorgeschrieben sind, und
ein gültiger Zielpunkt unter der Vielzahl von Zielpunkten auswählbar ist.

9. Computerprogrammprodukt zum Generieren eines Fahrtweges für ein Fahrzeug, das durch eine Zufahrt auf ein Arbeitsfeld, das von einer Grenze geteilt ist, fährt und dieses verlässt, wobei das Programm zum Generieren des Fahrtweges bewirkt, dass ein Computer ausführt:
eine Funktion zum Registrieren eines Anfangspunkts zum Registrieren der Position eines ersten Endpunkts auf einer Seite der Grenze der Zufahrt als ein Anfangspunkt (Ps);
eine Funktion zum Registrieren eines Zwischenpunkts zum Registrieren der Position eines Formmerkmalspunktes, der eine Form des Arbeitsfeldes vorschreibt, als ein Zwischenpunkt (P1, P2, P3);
eine Funktion zum Registrieren eines Endpunkts zum Registrieren der Position eines zweiten Endpunkts, der dem ersten Endpunkt auf einer Seite der Grenze der Zufahrt gegenüberliegt, als ein Endpunkt (Pe);
eine Funktion zum Berechnen einer Grundform zum Berechnen einer Grundform des Arbeitsfeldes durch Verbinden einer Position des Anfangspunktes (Ps), einer Position des Zwischenpunktes (P1, P2, P3) und einer Position des Endpunktes (Pe);
eine Funktion zum Generieren von Zufahrtsinformationen zum Generieren von Zufahrtsinformationen mit einem Viereck als eine Form der Zufahrt, wobei das Viereck den Anfangspunkt (Ps) und den Endpunkt (Pe) als entgegengesetzte Ecken aufweist und zwei Seiten entlang einer äußeren Formausdehnungslinie der Grundform aufweist; und
eine Funktion zum Generieren eines Fahrtweges zum Definieren eines Bereichs, der sich von der Zufahrt des Arbeitsfeldes unterscheidet, als ein Zielarbeitsbereich, und Generieren eines Fahrtweges für das Arbeitsfahrzeug zum automatischen Fahren in dem Zielarbeitsbereich.

10. Computerprogrammprodukt zum Generieren eines Fahrtweges für ein Arbeitsfahrzeug, wobei das Programm zum Generieren des Fahrtweges dazu bestimmt ist, zu bewirken, dass ein Computer ausführt:
eine Funktion zum Registrieren eines Anfangspunkts zum Registrieren einer Position eines ersten Endpunkts eines Zielarbeitsbereichs zum Arbeitsfahren als ein Anfangspunkt (Ps);
eine Funktion zum Registrieren eines Zwischenpunkts zum Registrieren der Position eines Formmerkmalspunkts, der eine Form des Zielarbeitsbereichs vorschreibt, als ein Zwischenpunkt (P1, P2, P3);
eine Funktion zum Registrieren eines Endpunkts zum Registrieren der Position von einem von dem ersten Endpunkt und einem zweiten Endpunkt, der dem ersten Endpunkt benachbart ist, als ein Endpunkt (Pe);
eine Funktion zum Berechnen einer Grundform zum Berechnen einer Grundform des Zielarbeitsbereichs durch Verbinden einer Position des Anfangspunkts (Ps), einer Position des Zwischenpunkts (P1, P2, P3) und einer Position des Endpunkts (Pe);
eine Funktion zum Generieren eines Fahrtweges zum Generieren eines Fahrtweges für das Arbeitsfahrzeug zum automatischen Fahren in dem Zielarbeitsbereich; und
eine Funktion zum Berechnen der Positionen des Anfangspunkts (Ps), des Zwischenpunkts (P1, P2, P3) und des Endpunkts (Pe) durch Ändern einer eigenen Position gemäß Abständen von der eigenen Position zu einem oder mehreren Zielpunkten, die den Positionen des Anfangspunkts (Ps), des Zwischenpunkts (P1, P2, P3) und des Endpunkts (Pe) zugehörig sind, wobei die Zielpunkte an Ecken von einem von dem Arbeitsfahrzeug und einem Fahrzeug vorgeschrieben sind, das in der Lage ist, in dem Zielarbeitsbereich zu fahren.

11. Computerimplementiertes Verfahren zum Generieren eines Fahrtweges für ein Arbeitsfahrzeug, das durch eine Zufahrt auf ein Arbeitsfeld, das von einer Grenze geteilt ist, fährt und dieses verlässt, wobei das Verfahren umfasst:
Registrieren der Position eines ersten Endpunkts auf einer Seite der Grenze der Zufahrt als ein Anfangspunkt (Ps);
Registrieren der Position eines Formmerkmalspunkts, der eine Form des Arbeitsfeldes vorschreibt, als ein Zwischenpunkt (P1, P2, P3);
Registrieren der Position eines zweiten Endpunkts, der dem ersten Endpunkt auf einer Seite der Grenze der Zufahrt gegenüberliegt, als ein Endpunkt (Pe);
Berechnen einer Grundform des Arbeitsfeldes durch Verbinden einer Position des Anfangspunkts (Ps), einer Position des Zwischenpunkts (P1, P2, P3) und einer Position des Endpunkts (Pe);
Generieren von Zufahrtsinformationen mit einem Viereck als eine Form der Zufahrt, wobei das Viereck den Anfangspunkt (Ps) und den Endpunkt (Pe) als entgegengesetzte Ecken aufweist und zwei Seiten entlang einer äußeren Formausdehnungslinie der Grundform aufweist; und
Definieren eines Bereichs, der sich von der Zufahrt des Arbeitsfeldes unterscheidet, als ein Zielarbeitsbereich, und Generieren eines Fahrtweges für das Arbeitsfahrzeug zum automatischen Fahren in dem Zielarbeitsbereich.

12. Computerimplementiertes Verfahren zum Generieren eines Fahrtweges für ein Arbeitsfahrzeug, wobei das Verfahren umfasst:
Registrieren der Position eines ersten Endpunkts eines Zielarbeitsbereichs zum Arbeitsfahren als ein Anfangspunkt (Ps);
Registrieren der Position eines Formmerkmalspunkts, der eine Form des Zielarbeitsbereichs vorschreibt, als ein Zwischenpunkt (P1, P2, P3);
Registrieren der Position eines ersten Endpunkts und eines zweiten Endpunkts, der dem ersten Endpunkt benachbart ist, als ein Endpunkt (Pe);
Berechnen einer Grundform des Zielarbeitsbereichs durch Verbinden einer Position des Anfangspunkts (Ps), einer Position des Zwischenpunkts (P1, P2, P3) und einer Position des Endpunkts (Pe);
Generieren eines Fahrtweges für das Arbeitsfahrzeug zum automatischen Fahren in dem Zielarbeitsbereich; und
Berechnen der Positionen des Anfangspunkts (Ps), des Zwischenpunkts (P1, P2, P3) und des Endpunkts (Pe) durch Ändern einer eigenen Position gemäß Abständen von der eigenen Position zu einem oder mehreren Zielpunkten, die den Positionen des Anfangspunkts (Ps), des Zwischenpunkts (P1, P2, P3) und des Endpunkts (Pe) zugehörig sind, wobei die Zielpunkte an Ecken von einem von dem Arbeitsfahrzeug und einem Fahrzeug vorgeschrieben sind, das in der Lage ist, in dem Zielarbeitsbereich zu fahren.

## Revendications

1. Dispositif de génération d'itinéraire pour un véhicule de travail qui entre dans et quitte une zone de travail divisée par une limite par un passage d'admission, le dispositif de génération d'itinéraire comprenant :
une unité d'enregistrement de point de départ (621) qui est configurée pour enregistrer la position d'un premier point d'extrémité sur un côté de la limite du passage d'admission comme point de départ (Ps) ;
une unité d'enregistrement de point intermédiaire (622) qui est configurée pour enregistrer la position d'un point caractéristique de forme qui prescrit une forme de la zone de travail comme un point intermédiaire (P1, P2, P3) ;
une unité d'enregistrement de point d'arrivée (623) qui est configurée pour enregistrer la position d'un second point d'extrémité faisant face au premier point d'extrémité sur un côté de la limite du passage d'admission comme point d'arrivée (Pe) ;
une unité de calcul de la forme de base (624) qui est configurée pour calculer une forme de base de la zone de travail en reliant une position du point de départ (Ps), une position du point intermédiaire (P1, P2, P3) et une position du point d'arrivée (Pe) ;
une unité de génération d'informations sur un passage d'admission (625) qui est configurée pour générer des informations sur un passage d'admission avec un quadrilatère comme forme du passage d'admission, le quadrilatère ayant le point de départ (Ps) et le point d'arrivée (Pe) comme sommets opposés et ayant deux côtés le long d'une ligne d'extension de forme externe de la forme de base ;
et
une unité de génération d'itinéraire (63) qui est configurée pour définir une région autre que le passage d'admission de la zone de travail comme région de travail cible, et pour générer un itinéraire pour que le véhicule de travail se déplace automatiquement dans la région de travail cible.

2. Dispositif de génération d'itinéraire selon la revendication 1, dans lequel
l'unité de génération d'informations sur un passage d'admission (625) est configurée pour définir des sommets autres que le point de départ (Ps) et le point d'arrivée (Pe) du quadrilatère représentant la forme du passage d'admission comme un point intérieur (Pa) qui est adjacent à la région de travail cible et un point extérieur (Pb) distant de la région de travail cible, et
une direction depuis un côté reliant le point extérieur (Pb) et le point d'arrivée (Pe) à un côté reliant le point de départ (Ps) et le point intérieur (Pa) est une direction d'admission du véhicule de travail dans la région de travail cible.

3. Dispositif de génération d'itinéraire selon la revendication 2, comprenant en outre une unité d'enregistrement d'un point intérieur (627) qui est configurée pour enregistrer le point intérieur (Pa).

4. Dispositif de génération d'itinéraire selon la revendication 1, comprenant en outre une unité d'enregistrement d'un point intérieur (627) qui est configurée pour définir des sommets autres que le point de départ (Ps) et le point d'arrivée (Pe) du quadrilatère représentant la forme du passage d'admission comme un point intérieur (Pa) qui est adjacent à la région de travail cible et un point extérieur (Pb) distant de la région de travail cible, et pour enregistrer le point intérieur (Pa).

5. Dispositif de génération d'itinéraire selon l'une quelconque des revendications 1 à 4, dans lequel
l'enregistrement de position du point de départ (Ps), du point intermédiaire (P1, P2, P3) et du point d'arrivée (Pe) est réalisé par le déplacement du véhicule de travail le long de la limite, et
les positions du point de départ (Ps), du point intermédiaire (P1, P2, P3) et du point d'arrivée (Pe) sont calculées en utilisant une position propre basée sur les données de positionnement d'un module de positionnement par satellite (80) monté sur le véhicule de travail.

6. Dispositif de génération d'itinéraire selon la revendication 5, dans lequel
un ou plusieurs points de visée associés aux positions du point de départ (Ps), du point intermédiaire (P1, P2, P3) et du point d'arrivée (Pe) sont prescrits aux coins du véhicule de travail, et
les positions du point de départ (Ps), du point intermédiaire (P1, P2, P3) et du point d'arrivée (Pe) sont calculées en modifiant la position propre selon les distances de la position propre aux points de visée.

7. Dispositif de génération d'itinéraire pour un véhicule de travail, comprenant :
une unité d'enregistrement de point de départ (621) qui est configurée pour enregistrer la position d'un premier point d'extrémité d'une région de travail cible pour un déplacement de travail comme point de départ (Ps) ;
une unité d'enregistrement de point intermédiaire (622) qui est configurée pour enregistrer la position d'un point caractéristique de forme qui prescrit une forme de la région de travail cible comme point intermédiaire (P1, P2, P3) ;
une unité d'enregistrement de point d'arrivée (623) qui est configurée pour enregistrer la position d'un parmi le premier point d'extrémité et un second point d'extrémité adjacent au premier point d'extrémité comme point d'arrivée (Pe) ;
une unité de calcul de la forme de base (624) qui est configurée pour calculer une forme de base de la région de travail cible en reliant une position du point de départ (Ps), une position du point intermédiaire (P1, P2, P3) et une position du point d'arrivée (Pe) ; et
une unité de génération d'itinéraire (63) qui est configurée pour générer un itinéraire pour que le véhicule de travail se déplace automatiquement dans la région de travail cible,
dans lequel un ou plusieurs points de visée associés aux positions du point de départ (Ps), du point intermédiaire (P1, P2, P3) et du point d'arrivée (Pe) sont prescrits aux coins d'un parmi le véhicule de travail et un véhicule pouvant se déplacer dans la région de travail cible, et
les positions du point de départ (Ps), du point intermédiaire (P1, P2, P3) et du point d'arrivée (Pe) sont calculées en modifiant une position propre selon les distances de la position propre aux points de visée.

8. Dispositif de génération d'itinéraire selon la revendication 6 ou 7, dans lequel une pluralité des points de visée est prescrite, et
un point de visée valide peut être sélectionné parmi la pluralité des points de visée.

9. Programme informatique pour la génération d'un itinéraire pour un véhicule de travail qui entre dans et quitte une zone de travail divisée par une limite par un passage d'admission, le programme de génération d'itinéraire pour amener l'ordinateur à exécuter :
une fonction d'enregistrement d'un point de départ pour l'enregistrement de la position d'un premier point d'extrémité sur un côté de la limite du passage d'admission comme point de départ (Ps) ;
une fonction d'enregistrement d'un point intermédiaire pour l'enregistrement de la position d'un point caractéristique de forme qui prescrit une forme de la zone de travail comme point intermédiaire (P1, P2, P3) ;
une fonction d'enregistrement de point d'arrivée pour l'enregistrement de la position d'un second point d'extrémité faisant face au premier point d'extrémité sur un côté de la limite du passage d'admission comme point d'arrivée (Pe) ;
une fonction de calcul de forme de base pour le calcul d'une forme de base de la zone de travail en reliant une position du point de départ (Ps), une position du point intermédiaire (P1, P2, P3) et une position du point d'arrivée (Pe) ;
une fonction de génération d'informations sur un passage d'admission pour la génération d'informations sur un passage d'admission avec un quadrilatère comme une forme du passage d'admission, le quadrilatère ayant le point de départ (Ps) et le point d'arrivée (Pe) comme sommets opposés et ayant deux côtés le long d'une ligne d'extension de forme externe de la forme de base ; et
une fonction de génération d'itinéraire pour la définition d'une région autre que le passage d'admission de la zone de travail comme région de travail cible, et pour générer un itinéraire pour que le véhicule de travail se déplace automatiquement dans la région de travail cible.

10. Programme informatique pour la génération d'un itinéraire pour un véhicule de travail, le programme de génération d'itinéraire pour amener l'ordinateur à exécuter :
une fonction d'enregistrement de point de départ pour l'enregistrement de la position d'un premier point d'extrémité d'une région de travail cible pour un déplacement de travail comme point de départ (Ps) ;
une fonction d'enregistrement d'un point intermédiaire pour l'enregistrement de la position d'un point caractéristique de forme qui prescrit une forme de la région de travail cible comme point intermédiaire (P1, P2, P3) ;
une fonction d'enregistrement de point d'arrivée pour l'enregistrement de la position d'un parmi le premier point d'extrémité et un second point d'extrémité adjacent au premier point d'extrémité comme point d'arrivée (Pe) ;
une fonction de calcul de forme de base pour le calcul d'une forme de base de la région de travail cible en reliant une position du point de départ (Ps), une position du point intermédiaire (P1, P2, P3) et une position du point d'arrivée (Pe) ;
une fonction de génération d'itinéraire pour la génération d'un itinéraire pour que le véhicule de travail se déplace automatiquement dans la région de travail cible ; et
une fonction de calcul des positions du point de départ (Ps), du point intermédiaire (P1, P2, P3) et du point d'arrivée (Pe) en modifiant une position propre selon les distances de la position propre à un ou plusieurs points de visée associés aux positions du point de départ (Ps), du point intermédiaire (P1, P2, P3) et du point d'arrivée (Pe), les points de visée étant prescrits aux coins d'un parmi le véhicule de travail et un véhicule pouvant se déplacer dans la région de travail cible.

11. Procédé mis en œuvre par ordinateur pour la génération d'un itinéraire pour un véhicule de travail qui entre dans et quitte une zone de travail divisée par une limite par un passage d'admission, le procédé comprenant :
l'enregistrement de position d'un premier point d'extrémité sur un côté de la limite de passage d'admission comme point de départ (Ps) ;
l'enregistrement de position d'un point caractéristique de forme qui prescrit une forme de la zone de travail comme point intermédiaire (P1, P2, P3) ;
l'enregistrement de position d'un second point d'extrémité faisant face au premier point d'extrémité sur un côté de la limite du passage d'admission comme point d'arrivée (Pe) ;
le calcul d'une forme de base de la zone de travail en reliant une position du point de départ (Ps), une position du point intermédiaire (P1, P2, P3) et une position du point d'arrivée (Pe) ;
la génération d'informations sur un passage d'admission avec un quadrilatère comme forme du passage d'admission, le quadrilatère ayant le point de départ (Ps) et le point d'arrivée (Pe) comme sommets opposés et ayant deux côtés le long d'une ligne d'extension de forme externe de la forme de base ; et
la définition d'une région autre que le passage d'admission de la zone de travail comme région de travail cible, et la génération d'un itinéraire pour que le véhicule de travail se déplace automatiquement dans la région de travail cible.

12. Procédé mis en œuvre par ordinateur pour la génération d'un itinéraire pour un véhicule de travail, le procédé comprenant :
l'enregistrement de position d'un premier point d'extrémité d'une région de travail cible pour un déplacement de travail comme point de départ (Ps) ;
l'enregistrement de position d'un point caractéristique de forme qui prescrit une forme de la région de travail cible comme point intermédiaire (P1, P2, P3) ;
l'enregistrement de position d'un parmi le premier point d'extrémité et un second point d'extrémité adjacent au premier point d'extrémité comme point d'arrivée (Pe) ;
le calcul d'une forme de base de la région de travail cible en reliant une position du point de départ (Ps), une position du point intermédiaire (P1, P2, P3) et une position du point d'arrivée (Pe) ;
la génération d'un itinéraire pour que le véhicule de travail se déplace automatiquement dans la région de travail cible ; et
le calcul des positions du point de départ (Ps), du point intermédiaire (P1, P2, P3) et du point d'arrivée (Pe) en modifiant une position propre selon les distances de la position propre à un ou plusieurs points de visée associés aux positions du point de départ (Ps), du point intermédiaire (P1, P2, P3) et du point d'arrivée (Pe), les points de visée étant prescrits aux coins d'un parmi le véhicule de travail et un véhicule pouvant se déplacer dans la région de travail cible.
